# EUROPEAN PATENT SPECIFICATION

(11) **EP 3 731 653 B1**
(45) Date of publication and mention of the grant of the patent: **06.08.2025**
(21) Application number: 18834310.7
(22) Date of filing: 28.12.2018
(51) Int. Cl.: A21D 8/04, A21D 13/066, C08B 30/14, A23L 19/10, A21D 2/18, A21D 13/06, A23L 29/212, A21D 13/043, A21D 13/047

(54) **BAKED GOODS CONTAINING PREGELATINIZED WAXY CASSAVA STARCH**
BACKWAREN MIT VORGELATINISIERTER WACHSARTIGER MANIOKSTÄRKE
PRODUITS DE BOULANGERIE-PÂTISSERIE CONTENANT DE L'AMIDON DE MANIOC CIREUX PRÉGÉLATINISÉ

(30) Priority: 29.12.2017 US 201762611665 P
(43) Date of publication of application: 04.11.2020
(73) Proprietor: CORN Products Development Inc., Westchester, IL 60154 (US)
(72) Inventor: BAHAMMOU, Rachael, Bridgewater, New Jersey 08807 (US); DE LA PENA, Elena, Bridgewater, New Jersey 08807 (US); UZUNALIOGLU, Dilek, Bridgewater, New Jersey 08807 (US); SULLIVAN, Jeffrey, Bridgewater, New Jersey 08807 (US)
(74) Representative: Novagraaf Group
(86) International application number: PCT/US2018/067903
(87) International publication number: WO 2019/133836

(56) References cited:
- EP-A2- 2 829 182
- WO-A1-2016/046867
- CN-A- 106 163 287
- US-A- 4 923 709
- US-A1- 2001 055 638
- US-A1- 2003 094 104
- KANNO S ET AL: "Bakery products e.g. breads, cakes, doughnuts, baked confectionery, or unfermented breads, prepared by taking starch as starting material, and adding waxy tapioca starch and/or processed waxy tapioca starch", WPI / 2017 CLARIVATE ANALYTICS,, vol. 2015, no. 63, 11 September 2015 (2015-09-11), XP002784396

## Description

Disclosed herein are baked goods with improved properties that contain pregelatinized, waxy cassava starch, and methods of making such baked goods.

The art indicates that the shelf-life and freeze/thaw stability of baked goods can be improved by adding a chemically modified starch, such as, e.g., a crosslinked starch and/or etherified starch. Such chemically modified starches improve shelf-life and freeze/thaw stability as measured by the reduction in increased firmness of the baked good over time. Chemically modified starches, however, are perceived by consumers as unhealthy. So there is a need in the art for starches perceived by consumers as healthier that can replace chemically modified starches in baked goods and similarly prevent hardening of the baked good over time.

CN 106 163 287 A discloses a bakery product prepared by taking starch as starting material, and adding 0.5-100 pts. mass waxy tapioca starch and/or processed waxy tapioca starch with respect to 100 pts. mass starch.

US 2001/055638 is directed to a sponge cake premix that can be cooked easily with a microwave oven to prepare a sponge cake. A batter prepared by adding a thermocoagulation protein to a sponge cake premix containing as a main ingredient a cereal powder consisting of starch and a pregelatinized starch is cooked under heat with a microwave oven to obtain a sponge cake that permits eliminating the gum-like hard texture inherent in conventional sponge cakes of this type and exhibits a light and soft texture. The obtained sponge cake is free from bake shrinkage and exhibits a good-looking voluminous appearance.

EP 2 829 182 relates to a composition comprising from about 10% (w/w) to about 40% (w/w) pregelatinized waxy potato starch, pregelatinized waxy cassava starch, or any mixture thereof; from about 10% (w/w) to about 20% (w/w) gum; and from about 40% (w/w) to about 70% (w/w) dispersant.

### BRIEF DESCRIPTION OF THE DRAWINGS

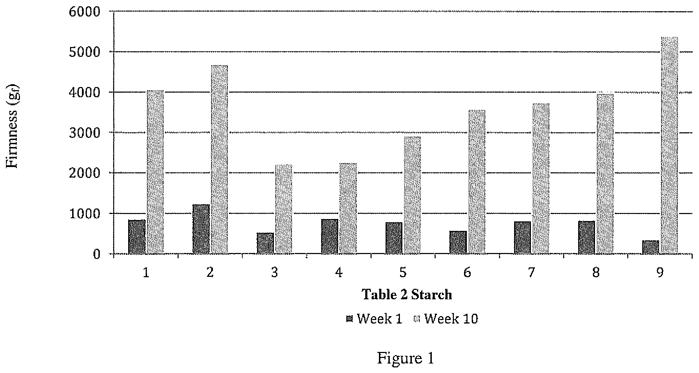

Figure 1 compares the firmness after 1 week's storage and 10 weeks' storage at ambient temperatures of an illustrative embodiment of a cookie made with pregelatinized waxy cassava starch to cookies made with a pregelatinized and chemically modified waxy cassava starch, a pregelatinized waxy corn starch, and a pregelatinized and chemically modified waxy corn starch.

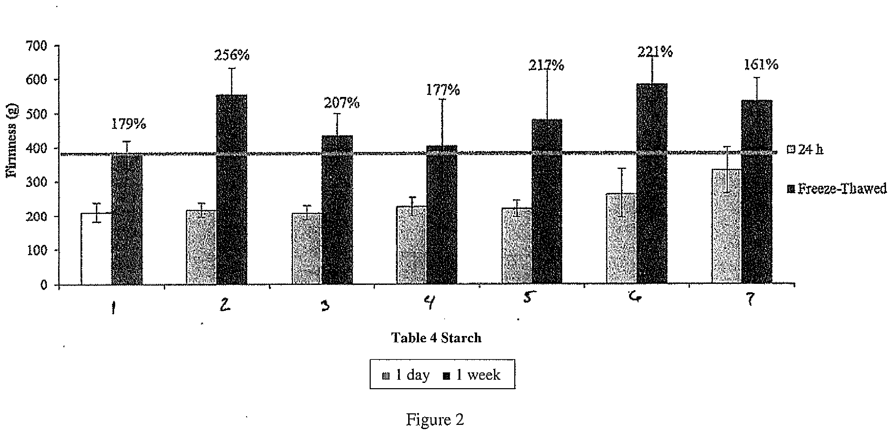

Figure 2 compares the crumb firmness measured after thawing, after 1 day's storage and 1 week's storage at -18° C of an illustrative embodiment of a thawed gluten-free bread made with pregelatinized waxy cassava starch to a thawed gluten-free bread made with a pregelatinized non-waxy cassava starch and a pregelatinized and chemically modified waxy cassava starch.

The invention is defined in the appended claims.

One aspect is directed to a gluten-free baked good comprising (i) between 1% and 10% by weight pregelatinized waxy cassava starch that is not otherwise modified (ii) a second starch or flour that is not a waxy cassava starch and (iii) a conventional bakery ingredient. Another aspect is directed to a method of making a gluten-free baked good comprising mixing a pregelatinized waxy cassava starch that is not otherwise modified with a second conventional bakery ingredient to form a mixture, and baking the mixture to form the baked good, wherein the pregelatinized waxy cassava starch is added to the mixture in an amount of between 1 and 10%. In one or more methods described herein, the pregelatinized waxy cassava starch is added in sufficient amount to act as an anti-staling agent. In an embodiment the method further comprises storing the baked good for 10 weeks at between 20°C and 25°C and wherein during storage the firmness of the baked good, as , measured using a TA.XT texture analyzer using a probe advanced at a rate of 4 mm/s over a distance of 15 mm, at applied force of 20 g (g_{f)}, increases by less than 100%, 200% or 300.

Another aspect is directed to a method for using pregelatinized waxy cassava starch that is not otherwise modified to make a gluten-free baked good in the amount of between 1% and 10%. Still another aspect is directed to a method for using pregelatinized waxy cassava starch to make a baked good selected from a gluten-free cookie, a gluten-free bread, and a gluten-free yellow cake.

Within this specification waxy cassava starch (also called tapioca starch) is a naturally low amylose starch. In embodiments the waxy cassava starch has less than 10% amylose by weight, or less than 5% amylose by weight, or less than 3% amylose by weight, or essentially 0% amylose by weight.

Pregelatinization is a term that is well known in the art. Without narrowing the full understanding of the term, in one aspect, a pregelatinized starch is a starch that is sufficiently heated in the presence of sufficient water to break down the internal structural of a starch granule. In another aspect, this break down can be measured by the destruction of the Maltese cross diffraction pattern apparent when starch is viewed under polarized light. As used in this specification, a pregelatinized starch is not otherwise modified unless specifically indicated. Additionally reference to a modified starch within this application means, for example, but not limited to chemical, enzymatic, or physical modification to a base starch. Illustrative modifications include, but are not limited to, starch conversion by oxidation, enzyme, or acid; starch stabilizing and/or crosslinking using for example, propylene oxide/phosphorous oxychloride, acetic anhydride/adipic anhydride, or STMP/STPP; thermal treatments such as thermal inhibition, or thermal annealing, or so called heat-moisture-treatments.

In one embodiment, the pregelatinized waxy cassava starch may be pregelatinized using any non-chemical means, including, but not limited to spray drying, drum drying, and extrusion. An illustrative process for pregelatinizing starch using drum drying follows. Starch slurry (30-40% solids w/w) is fed onto an applicator roller of a heated single drum (a single drum process). The slurry forms a film on the drum, and the film is removed from the drum using a blade. The film is then ground to a desire particle size. The amount of pregelatinization is affected, for example, by the solids content of the slurry, the temperature of the drum, the speed of rotation of the drum, and the cook time. Commonly, the drum is heated to temperatures between 50° and 150° C and rotates at a rate of between 15 and 30 rpm. The starch is cooked for a period of between 15 and 30 minutes.

Another aspect is directed to a gluten-free starch mix comprising (i) between 0.1% and 10% by weight pregelatinized waxy cassava starch that is not otherwise modified and a second starch or flour. In another embodiment the at least one other starch or flour component includes but is not limited to non-waxy cassava starch (cassava starch naturally having greater than about 10% amylose, and more typically naturally having between 15% and 25% amylose by weight) as well other waxy starches (less than about 10% amylose content) or high amylose starches (greater than about 40% amylose), illustrative starch bases (whether having high, low, or standard amylose content) include, but are not limited to wheat, rice, potato, corn, oats, sago, arrowroot, pea, fava bean, lentil, and other pulses. In some embodiments, the starch mixture described herein is gluten free. In other embodiments, the starch mix described herein further comprises a non-waxy cassava starch, a rice flour, and a potato starch. In still other embodiments, the starch mix described herein comprises a wheat flour.

A further embodiment is directed to a gluten-free baked good comprising between 1% and 10% by weight pregelatinized waxy cassava starch that is not otherwise modified, a second starch or flour that is not a waxy cassava starch and a conventional bakery ingredient. In still another embodiment, one or more baked goods described herein contains pregelatinized waxy cassava starch that is pregelatinized by drum drying

In other embodiments, the second conventional bakery ingredient is selected from a sweetener (including, but not limited to, e.g., sucrose, corn syrup, rebaudioside, and allulose); salt; a leavening agent (e.g. baking soda or baking powder); a flavoring agent; a hydrocolloid; an oil or shortening or other fat; an egg; water; a nut; a fruit; and a candy (e.g. chocolate chips). In some embodiments, the baked good is a yellow cake. In one embodiment, the yellow cake comprises a pregelatinized waxy cassava starch and a second conventional bakery ingredient selected from a sweetener (including, but not limited to, e.g., sucrose, corn syrup, rebaudioside, and allulose); salt; a leavening agent (e.g., baking soda or baking powder); a flavoring agent: a hydrocolloid; an oil or shortening or other fat; an egg; and water or other liquid (e.g., juice, milk, and oil). In another embodiment, the baked good is a gluten-free bread. In another embodiment, the gluten free bread comprises a pregelatinized waxy cassava starch and a second conventional bakery ingredient selected from a sweetener (including, but not limited to. e.g., sucrose, corn syrup, rebaudioside, and allulose); salt; yeast or other leavening agent; a flavoring agent; a hydrocolloid; an oil or shortening or other fat; an egg; and water.

Another embodiment is directed to a baked good comprising pregelatinized waxy cassava starch, wherein said baked good has a freeze/thaw stability that is better than the freeze/thaw stability of a baked good made with a starch that is not a waxy cassava starch. Still another embodiment is directed to a gluten free bread comprising pregelatinized waxy cassava starch, wherein said gluten-free bread has a freeze/thaw stability as good as or better than the freeze/thaw stability of a gluten-free bread comprising a pregelatinized and modified waxy cassava starch. In other embodiments, a baked good or gluten-free bread described herein that is stored for 7 days at -18° C has a crumb firmness of between 300g and 500g (gram-force), 350g and 450g (gram-force), or 375g and 425g (gram-force) after being thawed at a temperature of between 20° and 25° C. In another embodiment, a baked good or gluten-free bread described herein that is stored for 1 day at -18° C has a crumb firmness of between 100g and 300g (gram-force), 150g and 250g (gram-force), or 125g and 225g (gram-force) after being thawed at a temperature of between 20° and 25° C. In another embodiment, the percent increase of the crumb firmness over 7 day's storage at -18° C of a baked good or gluten-free bread described herein is less than 100%, less than 90%, less than 80%, between 70% and 90%, or between 70% and 80%, wherein the comparative baked goods or loaves are stored for 1 day and 7 days at -18° C and crumb firmness is measured after the baked goods or loaves are thawed at a temperature of between 20° and 25° C.

Another embodiment is directed to a baked good comprising a pregelatinized, waxy cassava starch, wherein said baked good has a shelf-life that is better than the shelf-life of a baked good (gluten-free or not gluten-free) comprising a pregelatinized non-waxy cassava starch (whether or not chemically modified). Still another embodiment is directed to a baked good (gluten-free) comprising a pregelatinized waxy cassava starch, wherein said baked good has a shelf-life as good as or better than the shelf-life of a baked good comprising pregelatinized and chemically modified waxy cassava starch. Still another embodiment is directed to a cookie or cake comprising pregelatinized waxy cassava starch, wherein said cookie or cake has a shelf-life as good as or better than the shelf-life of a cookie or cake comprising a pregelatinized and chemically modified waxy cassava starch. In another embodiment, the shelf-life is assessed by measuring the firmness of the baked good over time. In some embodiments, one or more baked good or cookie described herein has a firmness between 250g and 1500g (gram-force), 500g and 1000g (gram-force), or 500g and 900g (gram-force) after being stored for 1 week at ambient temperatures or temperatures between 20° and 25° C. In another embodiment, one or more baked good or cookie described herein has a firmness of between 1500g and 3000g (gram-force), 2000g and 2500g (gram-force), or 2100g and 2400g (gram-force) after being stored for 10 weeks at ambient temperatures or temperatures between 20° and 25° C. In an even further embodiment, the percent increase in firmness of one or more cookie or baked good described herein over 10 weeks' storage is less than 400%, less than 300%, less than 200%, or between 100% and 400% and all intervals in between, wherein the comparative baked goods or cookies are stored for 1 week or 10 weeks at ambient temperatures or temperatures between 20° and 25° C, and wherein said firmness is measured at between 20° and 25° C.

In an even further embodiment, the firmness described herein is measured with a TA.XT texture analyzer using a probe advanced at a rate of 4 mm/s over a distance of 15 mm, at applied force of 20 g (g_{f}). In yet a further embodiment, the firmness is measured at least 10 times and averaged to provide the firmness.

The invention is further described by reference to the following examples, which are provided for illustrative purposes and are not limiting in any way. A person of ordinary skill in the art would understand that variations can be made to the Examples that would be within the scope of the claims.

### Procedural

Firmness measurements were made using a TA.XT texture analyzer using a probe advanced at a rate of 4 mm/s over a distance of 15 mm, at applied force of 20 g (g_{f}). Ten measurements were taken per sample.

### EXAMPLE 1

### Chocolate Chip Cookies

Chocolate chip cookies were made using the recipe provided in Table 1.

| Table 1: Cookie Recipe | |
|---|---|
| Ingredient | Usage percentage (w/w) |
| All-purpose flour | 30% |
| Starch from Table 2 | 2% |
| Baking soda | 0.5% |
| Salt | 0.5% |
| Butter, unsalted | 25% |
| Light brown sugar | 15% |
| Granulated sugar | 15% |
| Eggs | 11% |
| Vanilla extract | 1% |
| **TOTAL** | 100% |
| Chocolate chips | N/A |

Cookies were made by mixing the Table 1 ingredients together and baking at 375 °F for 8-10 minutes. The cookies were cooled and stored at ambient temperature. Cookie firmness was measured after being stored for 1 week and 10 weeks.

Cookies were prepared using the starches listed in Table 2.

| Table 2: Starches used in Cookies | |
|---|---|
| Sample | Modification |
| 1 | Pregelatinized modified waxy corn starch. |
| 2 | Drum dried and modified waxy corn starch - 8.8% PO and 0.018% POCl₃ |
| 3 | Pregelatinized waxy cassava starch (drum dried, low drum speed) |
| 4 | Pregelatinized waxy cassava starch (drum dried, high speed) |
| 5 | Pregelatinized and modified waxy cassava starch - 4% PO and 0.012% POCl₃ |
| 6 | Pregelatinized and modified waxy cassava starch - 8% PO, 0.015% POCl₃ |
| 7 | Pregelatinized and modified waxy cassava starch crosslinked only - 0.58% mixed adipate |
| 8 | Pregelatinized and modified waxy cassava starch - 4% AA and 0.58% mixed adipate |
| 9 | Crosslinked, spray dried non-waxy cassava starch |

Shelf-life for cookies, as measured by crumb force is reported in Figure 1, which shows that cookies made using pregelatinized waxy cassava starch were softer after being stored for 10 weeks than were cookies made with any of the other Table 2 starches. Notably, this effect was observed independent of the amount of drum drying as cookies made from pregelatinized waxy cassava starch subjected to low speed drum drying and high speed drum drying exhibited similar firmness to each other, and exhibited improved firmness compared to the pregelatinized and modified waxy cassava starches. It is further notable that cookies made using the pregelatinized waxy cassava starches were less firm after being stored for 10 weeks at ambient temperature than cookies made with the Table 2 pregelatinized and modified waxy cassava starches even though all cookies using waxy cassava starch were similarly firm after being stored for 1 week at ambient temperature.

### EXAMPLE 2

### Gluten-free Bread

Gluten-free bread was made using the recipe provided in Table 3.

| Table 3: Gluten-free Bread Recipe | | |
|---|---|---|
| **Ingredients** | **Baker's Percent (w/w)** | **True Percent (w/w)** |
| Cassava starch (non-waxy) | 35 | 14.2 |
| Rice Flour | 35 | 14.2 |
| Potato starch | 30 | 12.2 |
| Pregelatinized starch from Table 4 | 5.6 | 2.3 |
| Egg White Powder | 3.6 | 1.5 |
| Salt | 1.9 | 0.8 |
| Xanthan gum | 1.9 | 0.8 |
| Canola Oil | 12 | 4.9 |
| High Fructose Corn Syrup | 4.9 | 2 |
| Water | 115 | 46.7 |
| Yeast, Instant | 1.6 | 0.6 |
| TOTAL | | 100 |

Gluten-free bread was made by mixing together corn syrup, water (77° F) and yeast (to activate the yeast). The dry ingredients were mixed and yeast mixture was added. All ingredients were mixed to form dough. The dough was proofed for 60 to 80 minutes at 95° F (85% relative humidity). The dough was then baked at between 400° and 425° F for 45 minutes to produce loaves of bread that were allowed to cool. Cooled loaves were transferred to a plastic bag and frozen and stored at -18° C. The loaves were thawed after being stored for 24 hours and after being stored for 1 week and crumb firmness was measured.

Gluten-free loaves of bread were made using the starches listed in Table 4.

| Table 4: Starches Used in Bread | |
|---|---|
| Sample | Modification |
| 1 | Pregelatinized waxy cassava starch (low drum speed) |
| 2 | Pregelatinized non-waxy cassava starch |
| 3 | Pregelatinized, modified waxy cassava starch (4% PO, 0.012% POCl₃, |
| 4 | Pregelatinized, modified waxy cassava starch (8% PO, 0.015% POCl₃, high drum speed) |
| 5 | Pregelatinized, modified waxy cassava starch (8% PO, 0.015% POCl₃, low drum speed) |
| 6 | Pregelatinized, modified waxy cassava starch (4% AA, 0.58% mixed adipate, high drum speed) |
| 7 | Pregelatinized, modified waxy cassava starch (4% AA, 0.58% mixed adipate, low drum speed) |

Results are shown in Figure 2, which shows that thawed bread made with pregelatinized waxy cassava starch has a softer crumb and lower percent increase in crumb firmness when compared to a bread made with pregelatinized non-waxy cassava starch and pregelatinized and chemically modified waxy cassava starch after the bread is stored for 1 day and 7 days at -18° C.

## Claims

1. A gluten-free baked good comprising (i) between 1% and 10% by weight pregelatinized waxy cassava starch that is not otherwise modified (ii) a second starch or flour that is not a waxy cassava starch and (iii) a conventional bakery ingredient.

2. The baked good of claim 1, wherein said baked good is a cookie, a cake, or bread.

3. The baked good of any preceding claim, wherein the second starch or flour is selected from the group consisting of non-waxy cassava starch, rice flour, and potato starch..

4. A method of making a gluten-free baked good comprising mixing a pregelatinized waxy cassava starch that is not otherwise modified with a second conventional bakery ingredient to form a mixture; and baking the mixture to form the baked good, wherein the pregelatinized waxy cassava starch is added to the mixture in an amount of between 1% and 10%.

5. The method of claim 4 further comprising storing the baked good for 10 weeks at between 20 °C and 25 °C and wherein during storage the firmness of the baked good, as , measured using a TA.XT texture analyzer using a probe advanced at a rate of 4 mm/s over a distance of 15 mm, at applied force of 20 g (g_{f}), increases by less than 100%, 200% or 300.

6. The method of any one of claims 4 or 5 further comprising adding an unmodified starch and/or flour to the mixture.

7. Use of a pregelatinized waxy cassava starch that is not otherwise modified in a gluten-free baked good in the amount of between 1% and 10%.

8. Use of the pregelatinized waxy cassava starch according to claim 7 wherein the gluten-free baked good is a bread, a cake, or a cookie.

9. Use of the pregelatinized waxy cassava starch according to claim 7 or 8 to reduce the percent increase of crumb firmness, measured at ambient temperature and using a TA.XT texture analyzer using a probe advanced at a rate of 4 mm/s over a distance of 15 mm, at applied force of 20 g (g_{f}), of the baked good when compared to a baked good that does not contain said pregelatinized waxy cassava starch, wherein the crumb firmness is determined by comparing the crumb firmness of the thawed baked good after the baked good is stored at -18° C for 1 day to the crumb firmness of the thawed baked good after the baked good is stored at -18° C for 7 days.

10. A gluten-free starch mix comprising (i) between 0.1% and 10% by weight pregelatinized waxy cassava starch that is not otherwise modified and (ii) a second starch or flour.

11. The starch mix of claim 10, wherein the second starch or flour comprises a non-waxy cassava starch, a rice flour, and a potato starch.

## Patentansprüche

1. Glutenfreie Backware, umfassend (i) zwischen 1 Gew.-% und 10 Gew.-% vorgelatinierte wachshaltige Maniokstärke, die nicht anderweitig modifiziert ist, (ii) eine zweite Stärke oder ein zweites Mehl, die/das keine wachshaltige Maniokstärke ist, und (iii) eine herkömmliche Backzutat.

2. Backware nach Anspruch 1, wobei die Backware ein Keks, ein Kuchen oder Brot ist.

3. Backware nach einem der vorstehenden Ansprüche, wobei die zweite Stärke oder das zweite Mehl aus der Gruppe ausgewählt ist, bestehend aus nicht wachshaltiger Maniokstärke, Reismehl und Kartoffelstärke.

4. Verfahren zum Herstellen einer glutenfreien Backware, umfassend ein Mischen einer vorgelatinierten wachshaltigen Maniokstärke, die nicht anderweitig modifiziert ist, mit einer zweiten herkömmlichen Backzutat, um eine Mischung auszubilden, und ein Backen der Mischung, um die Backware auszubilden, wobei die vorgelatinierte wachshaltige Maniokstärke der Mischung in einer Menge zwischen 1 % und 10 % zugesetzt wird.

5. Verfahren nach Anspruch 4, ferner umfassend ein Lagern der Backware 10 Wochen lang zwischen 20 °C und 25 °C, und wobei sich während der Lagerung die Festigkeit der Backware, gemessen unter Verwendung eines TA.XT-Texturanalysators, unter Verwendung einer Sonde, die mit einer Geschwindigkeit von 4 mm/s über eine Distanz von 15 mm vorgeschoben wird, bei einer angewandten Kraft von 20 g (g_{f}), um weniger als 100 %, 200 % oder 300 erhöht.

6. Verfahren nach einem der Ansprüche 4 oder 5, ferner umfassend das Zusetzen einer unmodifizierten Stärke und/oder eines unmodifizierten Mehls zu der Mischung.

7. Verwendung einer vorgelatinierten wachshaltigen Maniokstärke, die nicht anderweitig modifiziert ist, in einer glutenfreien Backware der einer Menge zwischen 1 % und 10 %.

8. Verwendung der vorgelatinierten wachshaltigen Maniokstärke nach Anspruch 7, wobei die glutenfreie Backware ein Brot, ein Kuchen oder ein Keks ist.

9. Verwendung der vorgelatinierten wachshaltigen Maniokstärke nach Anspruch 7 oder 8, um die prozentuale Erhöhung einer Krumenfestigkeit, gemessen bei Raumtemperatur und unter Verwendung eines TA.XT-Texturanalysators, unter Verwendung einer Sonde, die mit einer Geschwindigkeit von 4 mm/s über eine Distanz von 15 mm vorgeschoben wird, bei einer angewandten Kraft von 20 g (g_{f}), der Backware im Vergleich zu einer Backware zu reduzieren, die die vorgelatinierte wachshaltige Maniokstärke nicht enthält, wobei die Krumenfestigkeit durch ein Vergleichen der Krumenfestigkeit der aufgetauten Backware, nachdem die Backware bei -18 °C 1 Tag lang gelagert wurde, mit der Krumenfestigkeit der aufgetauten Backware bestimmt wird, nachdem die Backware bei -18 °C 7 Tage lang gelagert wurde.

10. Glutenfreie Stärkemischung, umfassend (i) zwischen 0,1 Gew.-% und 10 Gew,-% vorgelatinierte wachshaltige Maniokstärke, die nicht anderweitig modifiziert ist, und (ii) eine zweite Stärke oder ein zweites Mehl.

11. Stärkemischung nach Anspruch 10, wobei die zweite Stärke oder das zweite Mehl eine nicht wachshaltige Maniokstärke, ein Reismehl und eine Kartoffelstärke umfasst.

## Revendications

1. Produit de boulangerie sans gluten comprenant (i) entre 1 % et 10 % en poids d'amidon de manioc cireux prégélatinisé qui n'est pas autrement modifié (ii) un second amidon ou une seconde farine qui n'est pas un amidon de manioc cireux et (iii) un ingrédient de boulangerie conventionnel.

2. Produit de boulangerie selon la revendication 1, dans lequel ledit produit de boulangerie est un biscuit, un gâteau ou du pain.

3. Produit de boulangerie selon l'une quelconque revendication précédente, dans lequel le second amidon ou la seconde farine est choisi dans le groupe constitué d'amidon de manioc non cireux, de farine de riz et d'amidon de pomme de terre.

4. Procédé de fabrication d'un produit de boulangerie sans gluten comprenant le mélange d'un amidon de manioc cireux prégélatinisé qui n'est pas autrement modifié avec un second ingrédient de boulangerie conventionnel pour former un mélange ; et la cuisson du mélange pour former le produit de boulangerie, dans lequel l'amidon de manioc cireux prégélatinisé est ajouté au mélange en une quantité comprise entre 1 % et 10 %.

5. Procédé selon la revendication 4 comprenant en outre le stockage du produit de boulangerie pendant 10 semaines à une température comprise entre 20 °C et 25 °C et dans lequel, pendant le stockage, la fermeté du produit de boulangerie, telle que mesurée à l'aide d'un analyseur de texture TA.XT à l'aide d'une sonde avancée à une vitesse de 4 mm/s sur une distance de 15 mm, à une force appliquée de 20 g (g_{f}), augmente de moins de 100 %, 200 % ou 300.

6. Procédé selon l'une quelconque des revendications 4 ou 5 comprenant en outre l'ajout au mélange d'un amidon et/ou d'une farine non modifiés.

7. Utilisation d'un amidon de manioc cireux prégélatinisé qui n'est pas autrement modifié dans un produit de boulangerie sans gluten dans la quantité comprise entre 1 % et 10 %.

8. Utilisation de l'amidon de manioc cireux prégélatinisé selon la revendication 7, dans laquelle le produit de boulangerie sans gluten est un pain, un gâteau ou un biscuit.

9. Utilisation de l'amidon de manioc cireux prégélatinisé selon la revendication 7 ou 8 pour réduire l'augmentation en pourcentage de la fermeté de mie, mesurée à température ambiante et à l'aide d'un analyseur de texture TA.XT à l'aide d'une sonde avancée à une vitesse de 4 mm/s sur une distance de 15 mm, à une force appliquée de 20 g (g_{f}), du produit de boulangerie par rapport à un produit de boulangerie qui ne contient pas ledit amidon de manioc cireux prégélatinisé, dans lequel la fermeté de mie est déterminée en comparant la fermeté de mie du produit de boulangerie décongelé après avoir été stocké à -18 °C pendant 1 jour à la fermeté de mie du produit de boulangerie décongelé après avoir été stocké à -18 °C pendant 7 jours.

10. Mélange d'amidon sans gluten comprenant (i) entre 0,1 % et 10 % en poids d'amidon de manioc cireux prégélatinisé qui n'est pas autrement modifié et (ii) un second amidon ou une seconde farine.

11. Mélange d'amidon selon la revendication 10, dans lequel le second amidon ou la seconde farine comprend un amidon de manioc non cireux, une farine de riz et un amidon de pomme de terre.
